# EUROPEAN PATENT SPECIFICATION

(11) **EP 3 766 592 B1**
(45) Date of publication and mention of the grant of the patent: **04.09.2024**
(21) Application number: 20185430.4
(22) Date of filing: 13.07.2020
(51) Int. Cl.: B08B 7/02, B01D 46/00, B08B 9/027, B08B 9/08, B08B 5/02, B08B 9/032

(54) **A DEVICE AND A METHOD FOR IMPEDING ADHESION OF AND FOR REMOVING ADHERED PARTICULATE MATTER, AND AN INSTALLATION COMPRISING SUCH DEVICE**
VORRICHTUNG UND VERFAHREN ZUR VERHINDERUNG DER ADHÄSION UND ZUM ENTFERNEN VON ANHAFTENDEM TEILCHENFÖRMIGEM MATERIAL UND ANLAGE MIT SOLCH EINER VORRICHTUNG
DISPOSITIF ET PROCÉDÉ POUR EMPÊCHER L'ADHÉRENCE ET ÉLIMINER DES MATIÈRES PARTICULAIRES COLLÉES ET INSTALLATION COMPRENANT UN TEL DISPOSITIF

(30) Priority: 12.07.2019 NL 2023500
(43) Date of publication of application: 20.01.2021
(73) Proprietor: JOA Technology Beheer B.V., 2628 XJ Delft (NL)
(72) Inventor: TUKKER, Marinus Adrianus, 2628XJ Delft (NL); DE JAGER, Gerard, 2628XJ Delft (NL)
(74) Representative: Algemeen Octrooi- en Merkenbureau B.V.

(56) References cited:
- CN-A- 108 325 955
- FR-A- 1 267 722
- US-A1- 2007 235 058
- US-A1- 2012 291 799
- US-A1- 2018 009 007
- US-A1- 2019 076 774

## Description

### Technical field

The present disclosure generally relates to particulate matter introducing material processing and handling, and more specifically to impeding adhesion of and removing adhered particulate matter from devices used in such material processing and handling.

### Background of the invention

In material handling and processing such as breaking, milling, hammering and the like of chunks, lumps, fibers or particulates of material or matter into smaller fractions or particles, such as fine powder, and in conveying such fractured or particulate material, for example in a gaseous fluid stream, such as by pneumatic transport lines, and in separation equipment or filter equipment for filtering particulate matter from the gaseous fluid stream, and other material handling equipment, particulate matter may adhere to a wall of a chamber in which the particulate matter is introduced.

Such adherence of particulate matter may not only lead to loss of yield, processing failures and production breakdowns due to clogging, caking and the like of particulate matter, but also causes material cross-contamination when a batch of new material having different properties compared to a previous batch is processed or handled by a same device in a same processing chamber thereof.

Removing particulate matter adhered to a wall, in particular in devices arranged for handling food, tobacco, mineral, chemical and pharmaceutical products, is technically quite a challenge because of strict safety requirements in the processing and handling of such products, in particular in view of requirements preventing cleaning equipment to be introduced in a chamber for handling and processing food, tobacco, mineral, chemical and pharmaceutical products, for example.

Document US 2019/076774 A1 (SZE TO GIN NAM [HK] ET AL) describes a cleaning device inducing sonic vibrations showing the features described in the preamble of appended claim 1.

Accordingly, there is a need for safely impeding adhesion of and/or removing adhered particulate manner in a device for material handling and processing.

### Summary

In a first aspect of the present disclosure, there is provided a device according to independent claim 1, comprising a housing enclosing a chamber surrounded by an inner wall of the housing, arranged for introducing particulate matter in the chamber, the device having an external support structure supporting at least one actuator element arranged for inducing sonic vibrations in the housing and the chamber, thereby providing at least one of impeding adherence of particulate matter at the inner wall of the chamber and releasing particulate matter adhered to the inner wall of the chamber.

In another aspect of the present disclosure, there is provided a method of operating the device according to independent claim 12.

It has been found that by subjecting the housing to sonic vibrations, that is vibrations in the ultrasound frequency range from 20 kHz and upwards, such as vibrations in a frequency range of 20 - 30 kHz, an acoustic pressure is provided in the chamber, thereby effectively impeding or reducing adherence of particulate matter at the inner wall of the chamber, or even preventing adherence, while already adhered particulate material can be removed from the inner wall of the chamber for cleaning purposes.

It has also been found that subjecting the housing to frequencies other than the aforementioned frequencies also leads to good results. In particular in a device according to the invention, such vibrations are provided with one or more of a frequency range from 11-15 kHz, from 16-21kHz, and 22-29kHz, at which frequencies the adherence of particulate matter at the inner wall of the chamber is reduced, or even prevented. It has been found that of the mentioned frequencies, the lower frequencies below the 20kHz are more effective in large systems or applications with a large (cylindrical) housing. Hence, depending on the application and dimensions of the component that is to be cleaned, one or more of the above mentioned frequency ranges may be selected.

As the actuator element is arranged at the outer side of the housing and is not in physical contact with the material or products processed or handled in the chamber, safety requirements imposed on the device for handling and processing of food and medical products, as mentioned above, can be complied with in the same manner as for a device not comprised of the solution according to the present disclosure.

In the present description, throughout all aspects and embodiments thereof, the term "actuator element", or "at least one actuator element" are used, which are to be construed as referring to one single actuator element, two actuator elements, or more actuator elements such as 3, 4, 5, 6, 8, 10, 12, 15, or more than 15.

Due to the cleaning properties of the present disclosure, cross-contamination between batches of different products having different physical properties due to remaining particulate matter in the chamber, is effectively avoided with the present disclosure.

The term 'particulate matter' as used in the present description and the claims is to be construed as referring to particles of any type of material, be it in powder, fine powder form or fibrous form, and defined by weight per volume, such as grams/m³, particle diameter, particle length, or any other measure used for characterizing particulate matter.

In an embodiment of the present disclosure, the device comprises a control unit for controlling excitation of the at least one actuator element in at least one of a first vibrating mode and a second vibrating mode, wherein the first vibrating mode is inducing less strong vibrations than the second vibrating mode.

With the control unit, different modes of vibration can be induced in the housing and the chamber, including different grades of acoustic pressure inside the chamber, by controlling the intensity of the vibrations performed by the actuator element and/or by provoking different acoustic wave patterns inside the chamber, by controlling the vibration frequency and/or by superimposing a modulation signal at an excitation signal of the actuator element, thereby modulating the vibrations provided in one or more of strength, frequency and phase.

In a further embodiment of the device according to the present disclosure, the control unit is arranged for exciting the at least one actuator element in the first vibrating mode when the chamber is charged with particulate matter, i.e. is subjected to a particulate matter introducing operation, and for exciting the at least one actuator element in the second vibrating mode when the particulate matter is discharged from the chamber, i.e. the chamber is free from a particulate matter introducing operation.

That is, during operation of the device wherein particulate matter is handling or processed in the chamber, the control unit is operated in the first vibrating mode for generating a relative low acoustic pressure inside the chamber, such that the normal or intended material processing or handling is not impeded by the acoustic pressure. However, the thus generated acoustic pressure should be of a sufficient strength for bringing particulate matter close to and along the inner wall of the chamber in a state of turbulence, thereby effectively impeding or reducing or even preventing adherence of particulate matter to the inner wall, compared to a device not arranged in accordance with the present disclosure.

For cleaning of the chamber, after having handled or processed a batch of particulate matter, the control unit is operated in the second vibrating mode, arranged for generating a maximum or near maximum acoustic pressure in the chamber, of a strength for removing particulate matter already adhered to the inner wall of the chamber.

In another embodiment, the device comprises a gas stream generating unit, arranged for providing, i.e. generating and forcing, a cleaning gas stream, such as a stream of air or an inert gas, for example, through the chamber at least when the actuator element is excited in the second vibrating mode.

In another embodiment, the device comprises several distinct operating modes. One of the operating modes being a start mode, another mode being a stop mode. In an embodiment, the start and stop modes are performed immediately one after the other, so that immediately after a rest or inactive mode, a start and stop sequence follows. In a further embodiment, this start-stop sequence can also be repeated several times, by which, especially for particular applications, the cleaning process is further improved. The thus generated cleaning gas stream is of a capacity and speed for transporting the released particulate matter out of the chamber. Such a cleaning gas stream allows the cleaning of chambers oriented in any direction, such as an elongated chamber longitudinally extending in horizontal direction, for example. The gas stream generating unit may be operated in a suction mode and/or blowing mode for forcing the cleaning gas stream through the chamber.

In a particular embodiment of the present disclosure, for processing a gaseous fluid stream comprising particulate matter, the chamber is provided with at least one inlet for receiving the gaseous fluid stream, and at least one outlet for discharging gas and particulate matter not collected in the chamber.

For this particular embodiment, the control unit may be arranged for exciting the at least one actuator element in the first vibrating mode when the gaseous fluid stream is present in the chamber, and for exciting the at least one actuator element in the second vibrating mode when the gaseous fluid stream is absent of the chamber.

In this particular embodiment, for cleaning purposes of the chamber, the cleaning gas stream may be introduced in upstream and/or downstream direction of the flow direction of the gaseous fluid, in particular using the inlet and outlet of the chamber, if available, or an inlet and/or outlet of the chamber separate from the inlet and outlet of the gaseous fluid stream.

In practice, for devices arranged for handling and processing fine powder products, explosion safety requirements and regulations are in place. That is, the housing has to be constructed to withstand high gas pressures, such as up to and even above 11 bar(a), for example. As a result, the housing of such devices is made of relatively thick steal, such as carbon steel or stainless steel, for example, or an other sturdy material, having a thickness ranging, for example, from 3 to 10 mm or even up, resulting in a very rigid and heavy housing, up to a few tons of weight.

Also housings of huge devices, that is housings having a height and width of several meters, dimensions that are not uncommon in chemical and food processing, can be very heavy and rigid. Hence, inducing sonic vibrations in such rigid and sturdy housings is technically problematic.

In a further embodiment of the present disclosure the device comprises an outer housing and an inner housing arranged inside the outer housing, the inner housing enclosing the chamber, and wherein the outer housing comprising the support structure supporting the at least one actuator element.

In this embodiment, sonic vibrations of the at least one actuator element are transferred to or induced in the inner housing comprising the chamber, while the outer housing serves as the support structure supporting the at least one actuator element.

In this manner, the outer housing can be of more rigid construction in particular of a construction for meeting explosion safety requirements, compared to the inner housing, which may be of a much less rigid and more flexible construction, such that an acoustic pressure can be generated in the chamber as disclosed above, however requiring less powerful actuators than required for inducing sonic vibrations in the outer housing. In an example, the actuators may be a factor ten or more less powerful.

In an embodiment, for facilitating the induction of sonic vibrations, the inner housing is suspended inside the outer housing and attached to the outer housing by vibration support attachments, such as rubber support attachments, for example.

The solution according to the present disclosure is very advantageously in a filter device for filtering particulate matter from a gaseous fluid stream entering the chamber through an inlet and leaving the chamber through an outlet thereof, wherein the chamber is of an elongated shape, comprising a plurality of elongated filter sleeves, the filter sleeves suspended in longitudinal direction in the chamber, wherein the filter sleeves are arranged for passing a gaseous fluid stream comprising particulate matter entering or charging the chamber through the inlet and leaving or discharging the chamber through the outlet, wherein particulate matter is collected at an outer side of the sleeves in the chamber, the device comprising air jet pulse generators arranged for periodically releasing an air jet through the sleeves, for releasing particulate matter collected at the sleeves into the chamber.

The filter sleeves may be made of a textile mesh or plastics material, for example, comprising an outer wall having openings for passing gas and blocking particulate matter above certain dimensions. By way of a non-limiting example, such as for blocking particles having a diameter larger than 8 micron of a fine powder product of about 10-100 gram/m³.

Released particulate matter may be collected at an outer end of the chamber, such as a funnel shaped end, at a material intake side of the chamber, for example.

In an embodiment of this device, a gas stream generating unit is arranged for generating a cleaning gas stream through the filter sleeves into the chamber, when the at least one actuator element is operated in its cleaning vibrating mode, as disclosed above. The cleaning gas stream, preferably, has a direction of flow through the filter sleeves reversed to a direction of flow of the gaseous fluid stream comprising the particulate matter.

Actuators for inducing sonic vibrations in the housing, i.e. the inner housing of the device, in accordance with the present disclosure, are known and available.

In an embodiment of the present disclosure, the at least one actuator element is a sonic vibration electromechanical transducer element, operating in a direction transverse to the inner wall of the chamber. Such an electromechanical transducer element may be of a piston-and-rod type construction, wherein the rod is engaging the housing, i.e. the inner housing of the device, and the piston is electromechanically excited or driven in a sonic vibrating movement, by an electromagnetic voice coil or the like, accommodated in an enclosure attached to the support structure or the outer housing of the device. Such an electromechanical transducer element can be advantageously controlled by an electronic control unit, operated from a remote site, for example.

In a practical embodiment of the present device, a plurality of spaced apart actuator elements is arranged at various positions outside the chamber. These positions are carefully calculated an selected, using acoustic pressure generating modelling algorithms tuned adjusted to a particular device, for example, for generating a desired acoustic pressure inside the chamber. In such a case, the control unit may be arranged for controlling and setting each actuator element separately.

In an embodiment, the device comprises a plurality of actuator elements, or more particularly, transducers, for example in sets of 2 or more, and preferably a set of 3. The frequency of each set is swept independently around an installed resonance frequency (being the frequency at which minimum impedance and minimum phase is achieved) to displace acoustic nodes, ensuring continuous varying constructive interference throughout the cylinder volume. This is in contrast with the situation where the frequency is fixed, having static acoustic nodes (and possibly locations of destructive interference) where no dynamics take place.

By way of example, for each set, the sweeping frequency may be adjusted approximately every 100ms with steps of 20Hz, with a band of approximately 700Hz around the installed resonance frequency. A full sweep of a set of actuators therefore takes approximately 7 seconds and is repeated as a saw tooth. Each set, due to the production process (see table) has its own operational settings.

As an alternative to the saw tooth shaped sweep, the set of actuators may, in an embodiment, also have a sweep with a non-sinusoidal waveforms such as a square wave, triangle wave, pulse wave or cycloid wave. Preferably, the resonance frequency may differ between the sets, whereas the sweep band, sweep step and step interval are equal. The applied voltage and hence power transfer may differ as well, wherein preferably the sets with lower resonance frequency have higher voltages applied to the actuators. In a second aspect of the present disclosure, there is provide a method of operating a device according to the first aspect disclosed above, the device comprising a control unit for controlling excitation of the at least one actuator element in at least one of a first vibrating mode and a second vibrating mode, wherein the first vibrating mode is inducing less strong vibrations than the second vibrating mode, and a gas stream generating unit, arranged for providing, i.e. generating and forcing a cleaning gas stream through the chamber, the method comprising:
- operating the control unit for exciting the at least one actuator element in the first vibrating mode when the chamber is charged with particulate matter, i.e. subjected to a particulate matter introducing operation,
- operating the control unit for exciting the at least one actuator element in the second vibrating mode, during a first predetermined period of time, when the particulate matter is discharged from the chamber, i.e. the chamber is free from a particulate matter introducing operation,
- introducing a cleaning gas stream in the chamber by the gas stream generating unit while the control unit is operated for exciting the at least one actuator element in the second vibrating mode.

That is, during operation of the device for processing or handling particulate matter, i.e. in the first vibrating mode, an acoustic pressure is generated inside the chamber having an intensity and wave pattern for preventing as much as possible particulate matter from adhering to the inner wall of the chamber. In the cleaning mode, i.e. in the second vibrating mode, an acoustic pressure is generated inside the chamber having an intensity and wave pattern for removing as much as possible material adhered to the inner wall of the chamber, while at the same time a cleaning gas stream is generated for discharging released matter from the chamber.

In an embodiment, the cleaning gas stream is introduced in the chamber for a second period of time subsequent to the first period of time. That is, the cleaning gas stream is continued for a period of time after the at least one actuator element is switched off.

The first time period may, for example, continue for a first time period of 10 - 15 minutes, dependent on the severity of the matter adhered to the chamber, while the second time period may last for about 5 minutes, for example.

The above cleaning and discharging steps may be repeated a few times, for providing an optimum cleaning result, while the direction of the cleaning gas stream through the chamber may be altered, for example. It some applications, however, it should be avoided that released, i.e. dirty adhered material is mixed up with clean particulate matter used for production purposes.

In a third aspect of the present disclosure, a material handling and processing installation is provided, comprising material handling equipment producing particulate matter, the installation comprising at least one device according to the first and second aspect of the present disclosure.

Such an installation, which may be part of a larger production plant, may comprise several devices arranged in accordance with the present disclosure, such as material breaking devices, hammering devices, milling devices and the like for dividing chunks or lumps of material or matter into smaller fractions or particles, such as a fine powder; pneumatic transport line devices, filter equipment for filtering particulate matter from the gaseous fluid stream as disclosed above, and any other material handling devices in which particulate matter may adhere to a wall of a chamber in which the particulate matter is introduced.

In particular an installation arranged for handling and processing dry products, including one of food products, cut tobacco products, mineral products, pharmaceutical products and chemical products, such as plastics, toner, detergents, and the like.

The above-mentioned and other features and advantages of the present disclosure are illustrated in the following description with reference to the enclosed drawings which are provided by way of illustration only and which are not limitative to the present invention.

### Brief description of the Drawings

Fig. 1 shows, in a schematic and illustrative manner, partly in a cross-sectional view, an embodiment of a device in accordance with the present disclosure, and an operational mode thereof.
Fig. 2 shows, in a schematic and illustrative manner, partly in a cross-sectional view, another embodiment of a device in accordance with the present disclosure, and an operational mode thereof.
Fig. 3 shows, in a schematic and illustrative manner, partly in a cross-sectional view, a further embodiment of a device in accordance with the present disclosure.
Fig. 4 shows, in a flow type diagram, a method of operating a device in accordance with the present disclosure.
Fig. 5 shows, in a schematic and illustrative manner, partly in a cross-sectional view, an embodiment of a particulate matter filter device in accordance with the present disclosure.
Fig. 6 shows part of the filter device of Fig. 5 on an enlarged scale.
Fig. 7 shows in a schematic diagram a material handling and processing installation, comprising a filter device of Fig. 5.

### Detailed description

The present disclosure will now be described in more detail based on non-limitative exemplary embodiments. Throughout the description and in the figures, parts having a same or like construction or functional operation, are indicated by like reference numerals.

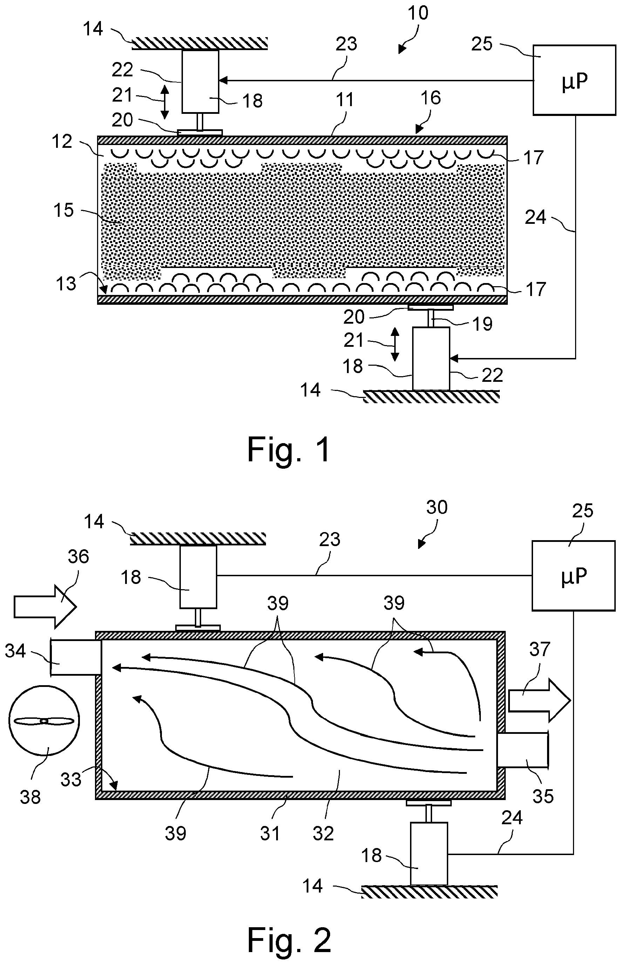

Figure 1 shows, in a schematic and illustrative embodiment, a device 10, having an housing 11 enclosing a chamber 12 surrounded by an inner wall 13 of the housing 11. The inner wall 13 has generally closed and smooth surface, thereby already preventing as much as possible adhesion of particulate matter at the surface of the inner wall 13.

The housing 11 and the chamber 12, for example, may have a circle cylindrical elongated shape as shown in Figure 1. In practice, however, the housing and the camber may have any shape, not limited to an elongated shape, and adapted to a particular particulate matter handling and processing operation to be executed the chamber 12.

Reference numeral 15 refers to particulate matter charged in the chamber 12, such as food, tobacco, mineral, chemical and pharmaceutical products,

The device 10 comprises an external support structure 14 to which actuator elements 18 are attached. Although not explicitly shown, it will be appreciated that the housing 11 may be suspended in or supported by the support structure 14, or another separate support structure (not shown). The support structure 14 may be of any constructional design, and attached to another structure or device and/or directly to the fixed world, for example.

The actuator elements 18 engage the housing 11 at an outer wall 16 thereof, and are arranged for inducing sonic, i.e. ultrasonic vibrations in the housing 11 and the chamber 12, resulting in acoustic pressure wave patterns 17 along the inner wall 13 of the chamber 12, as illustratively shown in Figure 1.

In the embodiment shown, the actuator elements 18 are sonic vibration electromechanical transducer elements, of a linear type, having an actuator rod 19 to which an engagement plate 20 connects, shaped in accordance with the shape of the outer wall 16, for optimally acting on the housing 11 for inducing the vibrations therein. In operation, the actuator rod 19 vibrates in longitudinal direction thereof, transverse to the outer wall 16 of the housing 11, i.e. transverse to the inner wall 13 of the chamber 12, as indicated by a double arrow 21. The actuator rod 19 is driven by an electromagnetic driver, voice coil, or the like, accommodated in an enclosure 22, fixed to the support structure 14.

The actuator element 18, i.e. the driving coil thereof, is excited under the control of an electronic controller or control unit 25, such as microcomputer or microprocessor operated controller, via wired 23, 24 or wireless connections (not shown).

The controller 25 is arranged operating at different modes of vibration for providing different grades and patterns of acoustic pressure 17 inside the chamber 12, by controlling the intensity of the vibrations performed by the actuator element 18, and/or the vibration frequency. The controller 25 is in particular arrangement for controlling each actuator element 18 separately and independently and/or for superimposing a modulation at the vibrations of the actuator rod 19, thereby modulating the vibrations generated in one or more of strength or intensity, frequency and phase.

The controller 25 is in particular arranged for exciting the actuator elements 18 in a first vibrating mode, applied when the chamber 12 is charged with particulate matter 15, and a second vibrating mode, applied when the particulate matter 15 is discharged from the chamber 12. The first vibrating mode corresponds to an intensity and/or pattern of the an acoustic pressure 17 in the chamber for bringing the particulate matter 15 alongside the inner wall 13 in state of turbulence, thereby preventing or impeding particles in the chamber 12 from contacting the inner wall 13 of the chamber 12. The second vibrating mode is characterized by a stronger vibration intensity compared to the first vibrating mode and, if applicable, an acoustic pressure pattern in the chamber 12 for removing particulate matter caked, lumped or otherwise collected at and adhered to the inner wall 13.

Explicit values of intensity or strength, frequency, and mutual phase differences between acoustic pressure waves generated in the chamber 12 by various actuator elements 18, depend, among others, on mechanical parameters like the size, thickness, weight, and type of housing material, etc., setting a resonance frequency of the housing, and the number and type of actuators used and there position in a particular embodiment. In practice, the vibrations may cause a deflection of the housing 11 in the micron range.

The position of the actuators 18 in respect of the housing 11 may be calculated and determined using position determining algorithms, against the background of one or more of providing optimum performance, high efficiency, and less operational costs, such as less energy consumption.

For the purpose of the present disclosure, other types of actuator elements may be used, such as rotary electric motor driven vibration actuator, dimensioned to provide sufficient vibration power. In practical embodiments, for example when handling or processing particulate matter for chemical or foodstuff products the housing 11 of the device 10 may be closed at both ends, arranged as material intake and material discharge end, respectively, comprising valves, mixing and other handling equipment, for example. It is further noted that the elongated housing 16 may extend in a vertical direction, for example.

Figure 2 shows another embodiment of a device in accordance with the present disclosure, comprising a closed elongated housing 31, defining an elongated chamber 32, enclosed by an inner wall 33 of the housing 31. For processing a gaseous fluid stream comprising particulate matter, the chamber 32 is provided, at one end thereof, with an intake or inlet 34 for receiving the gaseous fluid stream, indicated by arrow 36, and at an opposite end thereof, with an outlet 35 for discharging gas having less particulate matter, indicated by arrow 37, compared the gaseous fluid stream 36, for example.

The device 30 further comprises a gas stream generating unit 38, such as a fan or other device, for generating and forcing a cleaning gas stream 39 through the chamber 32 when the actuator elements 18 are excited in the above mentioned second vibrating mode, for releasing particulate matter adhered to the inner wall 33. For example, a stream 39 of air or an inert gas.

The thus generated cleaning gas stream 39 has flow capacity and speed for transporting the released particulate matter out of the chamber 32 at the inlet 34. The gas stream generating unit 38 may be operated in a suction mode for creating a low pressure or vacuum in the chamber 32 and/or in blowing mode for forcing the cleaning gas stream through the chamber by creating an over-pressure in the chamber 32.

The cleaning gas stream 39 preferably flows through the chamber 32 in a direction opposite at the direction of the gaseous fluid stream 36 charging the chamber 32 with particulate matter, as illustrated in Figure 2. Alternatively, the cleaning gas stream may flow in a same direction as the gaseous fluid stream 36 through the chamber 32, dependent at what end of the chamber 32 the released particle matter has to be discharged.

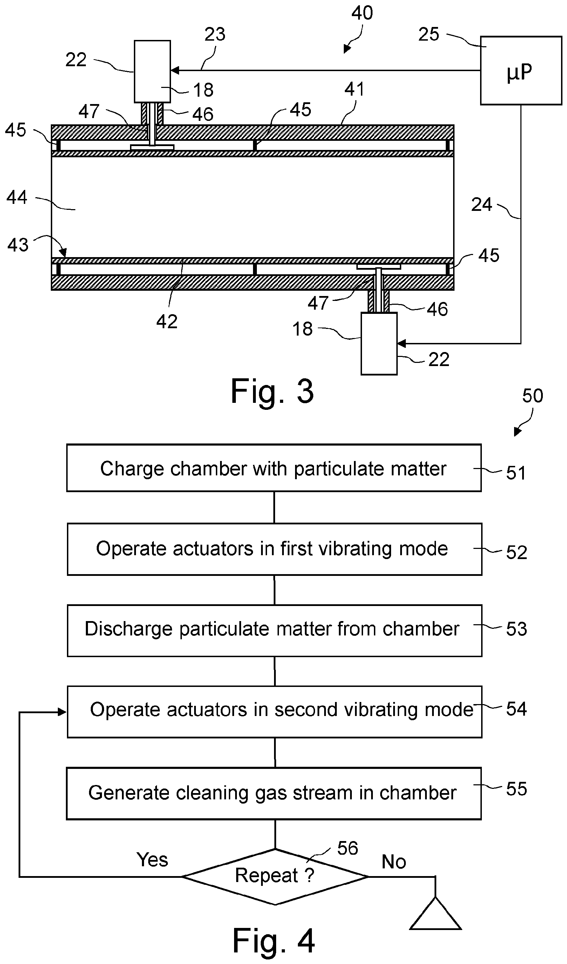

Figure 3 shows a device 40 in a further embodiment of the present disclosure, comprising an outer housing 41 and an inner housing 42 arranged inside the outer housing 41. The inner housing 42 encloses chamber 44, like the any of the chambers 12 or 32 disclosed in Figures 1 and 2, respectively. The inner housing 41 is suspended at the outer housing 41 by suspension elements 45, such as rubber rings, bearings, or other support attachments.

The actuator elements 18 with their enclosures 22 are supported by supports 46 forming part of or are separately attached to the outer housing 41. In this embodiment, the outer housing 41 advantageously provides the support structure supporting the actuator elements 18. This is in general possible, as in the device 40 the outer housing 41 can be of more rigid construction, in particular of a construction for meeting explosion safety requirements, compared to the inner housing 42, which may be of a much less rigid and more flexible construction, and in which sonic vibrations are induced by the actuator elements 18, engaging the inner housing through a passage 47 in the outer housing 41, such that an acoustic pressure pattern 17 can be generated in the chamber 44 as disclosed above with reference to Figure 1.

In this embodiment, less powerful actuator elements 18 may be used than required if same had to engage the outer housing 41 for inducing sonic vibrations, such as with the device 10 of Figure 1. It will be appreciated that in a device 40 designed to meet explosion safety requirements, the supports 46 and the actuator elements 18 are designed accordingly.

It will be appreciated that the device 40 may comprise a gas stream generating unit 38, such as a fan or other device, for generating and forcing a cleaning gas stream 39 through the chamber 44, as disclosed above with reference to Figure 2.

An operation method of a device 10; 30; 40 according to the present disclosure, comprising a controller 25 and a gas stream generating unit 38, is illustrated by the flow chart diagram 50 of Figure 4. In this diagram, steps follow each other in a direction from the top to the bottom of the figure, unless indicated by a respective arrow.

In a first step 51, "Charging chamber with particulate matter", the device is subjected to a material processing or handling by which particulate matter is introduced in the chamber 12; 32; 44. This can be any of breaking, milling, hammering and the like of chunks, lumps, fibers or particulates, or filtering out particles suspended in a gaseous fluid stream 36 such as food, tobacco, mineral, chemical and pharmaceutical particulate matter products. In this phase of the operation, the actuator elements 18 are excited by the control unit 25 in a first vibrating mode, having an intensity and/or providing an acoustic pressure wave pattern 17 in the chamber 12; 32; 44 for preventing as much as possible particulate matter from adhering to the inner wall 13; 33; 43 of the chamber 12; 32; 44, i.e. step 52, "Operate actuators in first vibrating mode".

When the particulate matter processing or handling is terminated in the chamber 12; 32; 44, i.e. step 53, "Discharge particulate matter from chamber", for an effective cleaning of the chamber 12; 32; 44 from particulate matter still adhered to the inner wall 13; 33; 43 of the chamber 12; 32; 44, the control unit 25 is operated in a second vibrating mode, during a first predetermined period of time, such as 10-15 minutes, for example, i.e. step 54, "Operate actuators in second vibrating mode".

At the same time, or a few minutes before or after the start of the second vibrating mode, a cleaning gas stream 39 is introduced and forced through the chamber 12; 32; 44, for example in opposite direction of a flow direction of a gaseous fluid stream 36 in the chamber 12; 32; 44, by a gas stream generating unit 38, i.e. step 55, "Generate cleaning gas stream in chamber".

In this cleaning mode, i.e. in the second vibrating mode, an acoustic pressure is generated inside the chamber 12; 32; 44 having an intensity and wave pattern for releasing as much as possible material adhered to the inner wall 13; 33; 43 of the chamber 12; 32; 44, while the cleaning gas stream is dimensioned for discharging released adhered matter from the chamber 12; 32; 44.

The cleaning gas stream 39 is introduced in the chamber 12; 32; 44 for a second period of time, and may be continued for a period of time after excitation of the actuator elements 18 is stopped, such as for about 5 minutes, for example.

The above cleaning steps 54, 55 may be repeated a few times, for providing an optimum cleaning result, while the direction of the cleaning gas stream 39 through the chamber 12; 32;44 may be altered, for example, i.e. decision step 56, "Repeat", result "Yes". Otherwise the operation is terminated and a new or different batch may be processed by the device, i.e. decision step 56, "Repeat", result "No".

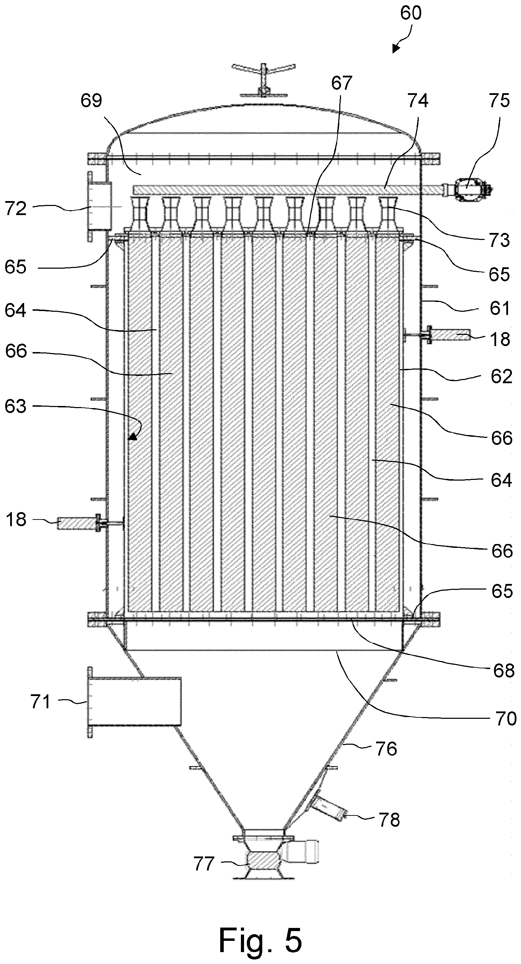

The solution according to the present disclosure is very advantageously in a filter device for filtering particulate matter from a gaseous fluid stream, such as shown in Figure 5.

The filter device 60 is of the type as shown in Figure 5, comprising a cylindrical outer housing 61 and a cylindrical inner housing 62, suspended by suspension elements 65 in the outer housing 61, and defining a chamber 64 having an inner wall 63. The outer chamber 61, the inner housing 62 and the chamber 64 are of an elongated shape, comprising a plurality of elongated filter bags, hoses or generally called sleeves 66. The filter sleeves 66 are suspended in longitudinal direction in the chamber 64 from a filter division plate 67, arranged at an upper end 69 of the chamber 64, viewed in the plane of the drawing. The filter sleeves are support at a lower end 70 of the chamber 64 by a filter support plate 68.

The filter division and support plates 67, 68 extend across the entire cross section of the chamber 64. The filter sleeves are open at the upper end 69 and closed at the lower end 70 of the chamber, and are arranged for passing a gaseous fluid stream comprising particulate matter entering or charging the chamber 64 through an inlet 71 at the lower end of the chamber 64 and leaving or discharging the chamber 64 through an outlet 72 at the upper end 69 of the chamber 64.

The filter bags, hoses or sleeves 66 may be made of a textile mesh or plastics material, for example, comprising an outer wall having openings for passing gas and blocking particulate matter above certain dimensions, such as for blocking particles having a diameter larger than 8 micron.

In operation, a gaseous fluid stream comprising particulate matter entering the filter device 60 via the inlet 71 is forced into the chamber 64 via openings in the filter support plate 68. The gaseous fluid stream cannot escape the chamber 64 at the upper end 69, as the chamber 64 is closed at this end by the filter division plate 67, such that the gaseous fluid stream is forced through the sheath of the sleeves 66. As a result, particulate matter from the gaseous fluid stream is collected at an outer side of the sleeves 66 facing the chamber 64. The gaseous fluid stream leaving the device 60 through the outlet 72 is also called the 'clean gas stream' at the 'clean filter end', as this gas stream is as much as possible free from particulate matter. The gaseous fluid stream entering the device 60 at the inlet 71 is also called the 'dirty gas stream' at the 'dirty filter end'.

The device 60 further comprises air (or gas) jet pulse generators 73 arranged outside the chamber 64 and connected to the open end of the sleeves 66, for periodically releasing an air jet or a jet of an other gas through the sleeves 66, thereby shaking the sleeves, for releasing particulate matter collected at the outside of the sheath of the sleeves 66. This released particulate matter is collected at the funnel shaped part 76 at the lower end 70 of the chamber 64. Air or an inert gas, for example, is supplied to the jet pulse generators 73 via a pipe or line 74 and a controlled valve 75. Particles collected in the funnel shaped part 76 can be discharged via a respective product discharge valve 77, for example. Optionally, a hammering device 78 may engage the funnel shaped part 76, supporting discharge of particle from the device 60.

In accordance with the present disclosure, actuator elements 18 engage the inner housing 62 and may be operated as elucidated above, for at least one of impeding adhesion of particulate matter at the inner wall 63 during filter operation of the device 60, and cleaning the chamber 64 from adhered particles. Released adhered particles may be removed from the device at the lower end 70 of the chamber 64, for example via the product discharge valve 77.

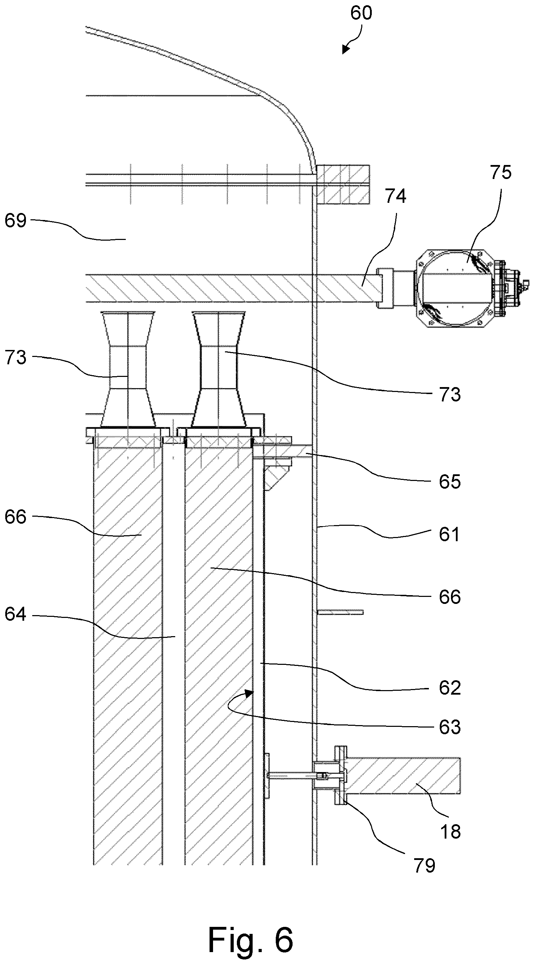

Figure 6 shows, on an enlarged scale, part of the device 60 at the upper end 69. The actuator elements 18 are supported and fixed to the outer housing 61 by support flanges 79. The suspension elements 65 may comprise rubber rings, bearings, or other support attachments.

Although not explicitly shown, the inlet 71 may also be located at the upper end 69 of the right hand side of the device 60 and extending through the filter division plate 67 into the chamber 64 at the upper end.

At the inlet 71 or a separate inlet at the funnel part 76, a gas stream generating unit, not shown, may connect, for generating and forcing a cleaning gas stream from the outlet 72, through the filter sleeves 66 and the chamber 64, when the actuator elements 18 are operated in the cleaning vibrating mode, as disclosed above, by creating a low pressure or vacuum in the chamber 64, for example.

The device 60, in an embodiment thereof, may have a length of 3-6 meters and a diameter of 1-3 meters, for example, and a weight of 3-6 tons, for example. the inner housing may be made of stainless steel or the like, for example.

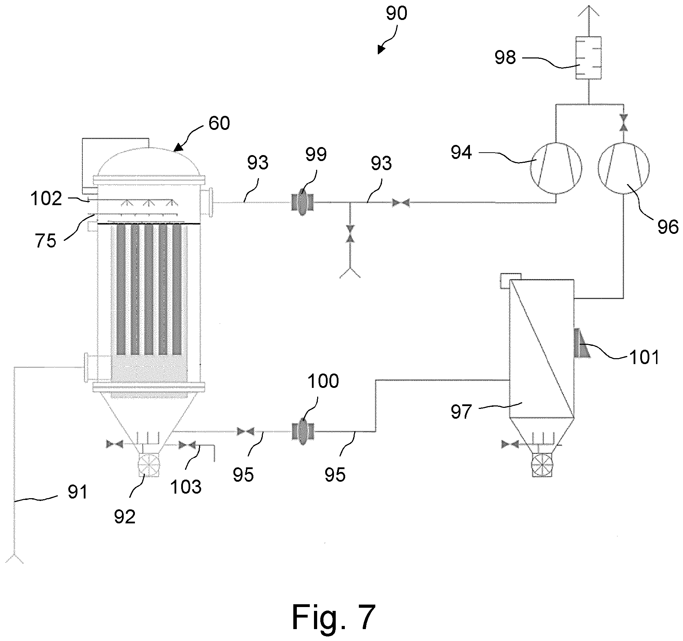

Figure 7 illustrates an installation 90 at a production plant for processing and handling dry products, including one of food products, cut tobacco products, mineral products, pharmaceutical products and chemical products, such as plastics, toner, detergents, and the like, suspended in a gaseous fluid stream, such as air or a gas.

The installation comprises a filter device 60, an inlet line 91 connecting to the inlet 71 of the device 60, for feeding a gaseous fluid stream comprising particulate products to be filtered into the filter device 60. A product discharge line 92, connecting to the product discharge valve 77, and a main gas discharge line 93, operated by a main fan 94, and connected to the outlet 72 of the filter device 60, for extracting a clean gaseous fluid stream from the filter device 60, by creating a low pressure or vacuum in the chamber 64.

The installation 90 further comprises an auxiliary gas or ventilation line 95, connected at the funnel shaped part 76 at the lower end of the filter device 60, and via the main gas discharge line 93 to the outlet 72. The auxiliary ventilation line 95 is operated by an auxiliary fan 96, through an intermediate ventilation filter 97, and operating as a gas stream generating unit, for forcing a cleaning gas stream through the filter device, by creating a low pressure or vacuum in the chamber 64. This, to discharge released adhered particle from the filter device in the cleaning mode of the actuator elements, as disclosed.

Reference numeral 98 refers to a so-called silencer, and reference numerals 99 and 100 indicate float control valves. Unit 101 is an explosion vent. Reference numerals 102 and 103 refer to a sprinkler installation in the filter device 60. For clarity sake, the actuator elements 18 and the control unit 25 are not shown. For the purpose of the present disclosure, exemplary power ratings of the actuators 18 may range from about 100 W to about 10 kW or even up.

Those skilled in the art will appreciate that the number of actuator elements used in a particular device may vary and is not limited to two, as shown in the exemplary embodiments.

The solution according to the present disclosure is applicable to any type of device used in handling and processing of particulate matter, such as material breaking devices, hammering devices, milling devices, filter devices, as well as pneumatic transport line devices and any other material handling devices in which particulate matter may adhere to a wall of a processing chamber charged with particulate matter.

The invention may be practiced otherwise than as specifically described herein, within the scope of the appended claims, and the above mentioned embodiments and examples are merely intended as an illustration to the skilled reader.

## Claims

1. A device, comprising a housing enclosing a chamber surrounded by an inner wall of said housing, arranged for introducing particulate matter in said chamber, said device having an external support structure supporting at least one actuator element arranged for inducing sonic vibrations in said housing and said chamber, thereby providing at least one of impeding adherence of particulate matter at said inner wall of said chamber and releasing particulate matter adhered to said inner wall of said chamber, **characterised in that** said sonic vibrations are one or more of a frequency range from 11-15kHz, 16-21kHz and 22-29kHz.

2. The device according to claim 1, further comprising a control unit, wherein said control unit is configured for controlling excitation of said at least one actuator element in at least one of a first vibrating mode and a second vibrating mode, wherein said first vibrating mode is inducing less strong vibrations than said second vibrating mode.

3. The device according to claim 2, wherein said control unit is configured for exciting said at least one actuator element in said first vibrating mode when said chamber is charged with particulate matter, and for exciting said at least one actuator element in said second vibrating mode when said particulate matter is discharged from said chamber.

4. The device according to claim 3, further comprising a gas stream generating unit, arranged for providing a cleaning gas stream through said chamber at least when said actuator element is excited in said second vibrating mode.

5. The device according to any of the previous claims, wherein said chamber comprises an inlet for receiving a gaseous fluid stream comprising particulate matter, and an outlet for discharging gas and particulate matter not collected in said chamber.

6. The device according to claim 5 in combination with one of claims 3 or 4, wherein said control unit is arranged for exciting said at least one actuator element in said first vibrating mode when said gaseous fluid stream is present in said chamber, and for exciting said at least one actuator element in said second vibrating mode when said gaseous fluid stream is absent of said chamber.

7. The device according to any of the previous claims, comprising an outer housing and an inner housing arranged inside said outer housing, said inner housing enclosing said chamber, wherein said outer housing comprising said support structure supporting said at least one actuator element, and wherein, in particular, any one or more of said inner housing is suspended inside said outer housing and attached to said outer housing by vibration support attachments, and said outer housing is of more rigid construction than said inner housing, in particular of a construction for meeting dust explosion safety requirements.

8. The device according to one of claim 7, in combination with one of claims 5 or 6, wherein said chamber is of an elongated shape, comprising a plurality of elongated filter sleeves, said filter sleeves suspended in longitudinal direction in said chamber, wherein said filter sleeves are arranged for passing a gaseous fluid stream comprising particulate matter entering said chamber through said inlet and leaving said chamber through said outlet, wherein particulate matter is collected at an outer side of said sleeves in said chamber, said device comprising air jet pulse generators arranged for periodically releasing an air jet through said sleeves, for releasing particulate matter collected at said sleeves into said chamber.

9. The device according to claim 8 in combination with claim 4, wherein said gas stream generating unit is arranged for providing said cleaning gas stream through said filter sleeves into said chamber, in particular in a direction of flow reversed to a direction of flow of said gaseous fluid stream.

10. The device according to any of the previous claims, wherein said at least one actuator element is a sonic vibration electromechanical transducer element, operating in a direction transverse to said inner wall of said chamber.

11. The device according to any of the previous claims, comprising a plurality of spaced apart actuator elements.

12. A method of operating a device according to any of the previous claims, comprising a control unit for controlling excitation of said at least one actuator element in at least one of a first vibrating mode and a second vibrating mode, wherein said first vibrating mode is inducing less strong vibrations than said second vibrating mode, and a gas stream generating unit, arranged for providing a cleaning gas stream through said chamber, said method comprising:
- operating said control unit for exciting said at least one actuator element in said first vibrating mode when said chamber is charged with particulate matter,
- operating said control unit for exciting said at least one actuator element in said second vibrating mode, during a first predetermined period of time, when said particulate matter is discharged from said chamber,
- introducing a cleaning gas stream in said chamber by said gas stream generating unit while said control unit is operated for exciting said at least one actuator element in said second vibrating mode,
wherein said first and second vibrating modes generate sonic vibrations in one or more of a frequency range from 11-15kHz, 16-21kHz and 22-29kHz.

13. The method according to claim 12, wherein said cleaning gas stream is introduced in said chamber for a second period of time subsequent to said first period of time.

14. A material handling and processing installation, comprising material handling equipment producing particulate matter, said installation comprising at least one device according to any of the previous claims.

15. The installation according to claim 14, arranged for handling and processing dry products, including one of food products, cut tobacco products, medical products and chemical products.

## Patentansprüche

1. Vorrichtung, umfassend ein Gehäuse, das eine Kammer einschließt, umgeben durch eine innere Wand des Gehäuses, angeordnet zum Einführen von teilchenförmigem Material in die Kammer, wobei die Vorrichtung eine externe Stützstruktur aufweist, die zumindest ein Aktuatorelement stützt, das angeordnet ist zum Induzieren von Schallschwingungen in dem Gehäuse und der Kammer, dabei zumindest eines aus Unterbinden von Adhäsion des teilchenförmigen Materials an der inneren Wand der Kammer und Lösen von an der inneren Wand der Kammer haftendem teilchenförmigem Material bereitstellend, **dadurch gekennzeichnet, dass** die Schallschwingungen eine oder mehrere aus einem Frequenzbereich von 11-15 kHz, 16-21 kHz und 22-29 kHz sind.

2. Vorrichtung nach Anspruch 1, ferner umfassend eine Steuereinheit, wobei die Steuereinheit ausgelegt ist zum Steuern der Anregung des zumindest einen Aktuatorelements in zumindest einem aus einem ersten Schwingungsmodus und einem zweiten Schwingungsmodus, wobei der erste Schwingungsmodus weniger starke Schwingungen induziert als der zweite Schwingungsmodus.

3. Vorrichtung nach Anspruch 2, wobei die Steuereinheit ausgelegt ist zum Anregen des zumindest einen Aktuatorelements in dem ersten Schwingungsmodus, wenn die Kammer mit teilchenförmigem Material beladen ist, und zum Anregen des zumindest einen Aktuatorelements im zweiten Schwingungsmodus, wenn das teilchenförmige Material aus der Kammer entladen wird.

4. Vorrichtung nach Anspruch 3, ferner umfassend eine Gasstromerzeugungseinheit, angeordnet zum Bereitstellen eines Reinigungsgasstroms durch die Kammer, zumindest wenn das Aktuatorelement im zweiten Schwingungsmodus angeregt wird.

5. Vorrichtung nach einem der vorhergehenden Ansprüche, wobei die Kammer einen Einlass zum Aufnehmen eines gasförmigen Fluidstroms, umfassend teilchenförmiges Material, und einen Auslass zum Auslassen von Gas und teilchenförmigem Material, das nicht in der Kammer gesammelt ist, umfasst.

6. Vorrichtung nach Anspruch 5 in Kombination mit einem der Ansprüche 3 oder 4, wobei die Steuereinheit angeordnet ist zum Anregen des zumindest einen Aktuatorelements im ersten Schwingungsmodus, wenn der gasförmige Fluidstrom in der Kammer vorhanden ist, und zum Anregen des zumindest einen Aktuatorelements im zweiten Schwingungsmodus, wenn der gasförmige Fluidstrom in der Kammer nicht vorhanden ist.

7. Vorrichtung nach einem der vorhergehenden Ansprüche, umfassend ein äußeres Gehäuse und ein inneres Gehäuse, angeordnet innerhalb des äußeren Gehäuses, wobei das innere Gehäuse die Kammer einschließt, wobei das äußere Gehäuse die Stützstruktur umfasst, die das zumindest eine Aktuatorelement stützt, und wobei, insbesondere, ein beliebiges oder mehrere des inneren Gehäuses im Inneren des äußeren Gehäuses aufgehängt und über Schwingungsstützbefestigungen an dem äußeren Gehäuse befestigt ist bzw. sind, und wobei das äußere Gehäuse einen starreren Aufbau aufweist als das innere Gehäuse, insbesondere einen Aufbau zur Erfüllung von Explosionssicherheitsanforderungen.

8. Vorrichtung nach Anspruch 7, in Kombination mit einem der Ansprüche 5 oder 6, wobei die Kammer eine längliche Form aufweist, umfassend mehrere längliche Filterhülsen, wobei die Filterhülsen in Längsrichtung in der Kammer aufgehängt sind, wobei die Filterhülsen angeordnet sind zum Passieren eines gasförmigen Fluidstroms, umfassend teilchenförmiges Material, das durch den Einlass in die Kammer eintritt und die Kammer durch den Auslass verlässt, wobei teilchenförmiges Material an einer äußeren Seite der Hülsen in der Kammer gesammelt wird, wobei die Vorrichtung Luftstrahlimpulsgeneratoren umfasst, die angeordnet sind zum periodischen Freigeben eines Luftstrahls durch die Hülsen, zum Freigeben des an den Hülsen gesammelten teilchenförmigen Materials in die Kammer.

9. Vorrichtung nach Anspruch 8 in Kombination mit Anspruch 4, wobei die Gasstromerzeugungseinheit angeordnet ist zum Bereitstellen des Reinigungsgasstroms durch die Filterhülsen in die Kammer, insbesondere in eine Strömungsrichtung, die einer Strömungsrichtung des gasförmigen Fluidstroms entgegengesetzt ist.

10. Vorrichtung nach einem der vorhergehenden Ansprüche, wobei das zumindest eine Aktuatorelement ein elektromechanisches Schallschwingungswandlerelement ist, das in einer Richtung quer zur inneren Wand der Kammer arbeitet.

11. Vorrichtung nach einem der vorhergehenden Ansprüche, umfassend mehrere voneinander beabstandete Aktuatorelemente.

12. Verfahren zum Betreiben einer Vorrichtung nach einem der vorhergehenden Ansprüche, umfassend eine Steuereinheit zum Steuern der Anregung des zumindest einen Aktuatorelements in zumindest einem aus einem ersten Schwingungsmodus und einem zweiten Schwingungsmodus, wobei der erste Schwingungsmodus weniger starke Schwingungen induziert als der zweite Schwingungsmodus, und eine Gasstromerzeugungseinheit, angeordnet zum Bereitstellen eines Reinigungsgasstroms durch die Kammer, wobei das Verfahren Folgendes umfasst:
- Betreiben der Steuereinheit zum Anregen des zumindest einen Aktuatorelements in dem ersten Schwingungsmodus, wenn die Kammer mit teilchenförmigem Material beladen ist,
- Betreiben der Steuereinheit zum Anregen des zumindest einen Aktuatorelements in dem zweiten Schwingungsmodus, während einer ersten vorbestimmten Zeitdauer, wenn das teilchenförmige Material aus der Kammer entladen wird,
- Einführen eines Reinigungsgasstroms in die Kammer durch die Gasstromerzeugungseinheit, während die Steuereinheit betrieben wird zum Anregen des zumindest einen Aktuatorelements in dem zweiten Schwingungsmodus,
wobei der erste und der zweite Schwingungsmodus Schallschwingungen in einem oder mehreren Frequenzbereichen von 11-15 kHz, 16-21 kHz und 22-29 kHz erzeugen.

13. Verfahren nach Anspruch 12, wobei der Reinigungsgasstrom für eine zweite Zeitdauer anschließend an die erste Zeitdauer in die Kammer eingeführt wird.

14. Materialbehandlungs- und -verarbeitungsanlage, umfassend Materialbehandlungsausrüstung, die teilchenförmiges Material produziert, wobei die Anlage zumindest eine Vorrichtung nach einem der vorhergehenden Ansprüche umfasst.

15. Anlage nach Anspruch 14, angeordnet zum Behandeln und Verarbeiten von Trockenprodukten, umfassend eines aus Nahrungsmittelprodukten, Schnitttabakprodukten, medizinischen Produkten und chemischen Produkten.

## Revendications

1. Dispositif comprenant un boîtier renfermant une chambre entourée d'une paroi intérieure dudit boîtier, agencé pour introduire des matières particulaires dans ladite chambre, ledit dispositif présentant une structure de support externe supportant au moins un élément actionneur agencé pour induire des vibrations sonores dans ledit boîtier et ladite chambre, permettant ainsi au moins l'un parmi empêcher l'adhérence des matières particulaires au niveau de ladite paroi intérieure de ladite chambre et libérer les matières particulaires qui adhèrent à ladite paroi intérieure de ladite chambre, **caractérisé en ce que** lesdites vibrations sonores sont une ou plusieurs d'une gamme de fréquences de 11-15 kHz, 16-21 kHz et 22-29 kHz.

2. Dispositif selon la revendication 1, comprenant en outre une unité de commande, dans laquelle ladite unité de commande est configurée pour commander l'excitation dudit au moins un élément actionneur dans au moins l'un d'un premier mode de vibration et d'un second mode de vibration, dans lequel ledit premier mode de vibration induit des vibrations moins fortes que ledit second mode de vibration.

3. Dispositif selon la revendication 2, dans lequel ladite unité de commande est configurée pour exciter ledit au moins un élément actionneur dans ledit premier mode de vibration lorsque ladite chambre est chargée de matières particulaires, et pour exciter ledit au moins un élément actionneur dans ledit second mode de vibration lorsque lesdites matières particulaires sont évacuées de ladite chambre.

4. Dispositif selon la revendication 3, comprenant en outre une unité de génération de flux de gaz, agencée pour fournir un flux de gaz de nettoyage à travers ladite chambre au moins lorsque ledit élément actionneur est excité dans ledit second mode de vibration.

5. Dispositif selon l'une quelconque des revendications précédentes, dans lequel ladite chambre comprend une entrée pour recevoir un flux de fluide gazeux comprenant des matières particulaires, et une sortie pour évacuer le gaz et les matières particulaires non collectées dans ladite chambre.

6. Dispositif selon la revendication 5, en combinaison avec l'une des revendications 3 ou 4, dans lequel ladite unité de commande est agencée pour exciter ledit au moins un élément actionneur dans ledit premier mode de vibration lorsque ledit flux de fluide gazeux est présent dans ladite chambre, et pour exciter ledit au moins un élément actionneur dans ledit second mode de vibration lorsque ledit flux de fluide gazeux est absent de ladite chambre.

7. Dispositif selon l'une quelconque des revendications précédentes, comprenant un boîtier extérieur, et un boîtier intérieur agencé à l'intérieur dudit boîtier extérieur, ledit boîtier intérieur renfermant ladite chambre, dans lequel ledit boîtier extérieur comprend ladite structure de support supportant ledit au moins un élément actionneur, et dans lequel, en particulier, ledit boîtier intérieur est suspendu à l'intérieur dudit boîtier extérieur et fixé audit boîtier extérieur par des fixations de support de vibration, et/ou ledit boîtier extérieur est d'une construction plus rigide que ledit boîtier intérieur, en particulier d'une construction permettant de satisfaire aux exigences de sécurité en matière d'explosion de poussières.

8. Dispositif selon la revendication 7, en combinaison avec l'une des revendications 5 ou 6, dans lequel ladite chambre est de forme allongée, comprenant une pluralité de manchons filtrants allongés, lesdits manchons filtrants étant suspendus dans la direction longitudinale dans ladite chambre, dans lesquels lesdits manchons filtrants sont agencés pour faire passer un flux de fluide gazeux comprenant des matières particulaires entrant dans ladite chambre par ladite entrée et quittant ladite chambre par ladite sortie, dans lesquelles les matières particulaires sont collectées sur un côté extérieur desdits manchons dans ladite chambre, ledit dispositif comprenant des générateurs d'impulsions à jet d'air agencés pour libérer périodiquement un jet d'air à travers lesdits manchons, afin de libérer les matières particulaires collectées au niveau desdits manchons dans ladite chambre.

9. Dispositif selon la revendication 8, en combinaison avec la revendication 4, dans lequel ladite unité de génération de flux de gaz est agencée pour fournir ledit flux de gaz de nettoyage à travers lesdits manchons filtrants dans ladite chambre, en particulier dans une direction d'écoulement inversée par rapport à la direction d'écoulement dudit flux de fluide gazeux.

10. Dispositif selon l'une quelconque des revendications précédentes, dans lequel ledit au moins un élément actionneur est un élément transducteur électromécanique à vibration sonore, fonctionnant dans une direction transversale à ladite paroi intérieure de ladite chambre.

11. Dispositif selon l'une quelconque des revendications précédentes, comprenant une pluralité d'éléments actionneurs espacés les uns des autres.

12. Procédé de fonctionnement d'un dispositif selon l'une quelconque des revendications précédentes, comprenant une unité de commande pour commander l'excitation dudit au moins un élément actionneur dans au moins l'un d'un premier mode de vibration et d'un second mode de vibration, dans lequel ledit premier mode de vibration induit des vibrations moins fortes que ledit second mode de vibration, et une unité de génération de flux de gaz, agencée pour fournir un flux de gaz de nettoyage à travers ladite chambre, ledit procédé comprenant :
- un fonctionnement de ladite unité de commande pour exciter ledit au moins un élément actionneur dans ledit premier mode de vibration lorsque ladite chambre est chargée de matières particulaires,
- un fonctionnement de ladite unité de commande pour exciter ledit au moins un élément actionneur dans ledit second mode de vibration, pendant une première période de temps prédéterminée, lorsque lesdites matières particulaires sont évacuées de ladite chambre,
- une introduction d'un flux de gaz de nettoyage dans ladite chambre par ladite unité de génération de flux de gaz pendant que ladite unité de commande fonctionne pour exciter ledit au moins un élément actionneur dans ledit second mode de vibration,
dans lequel ledit premier et ledit second modes de vibration génèrent des vibrations sonores dans une ou plusieurs d'une gamme de fréquences de 11-15 kHz, 16-21 kHz et 22-29 kHz.

13. Procédé selon la revendication 12, dans lequel ledit flux de gaz de nettoyage est introduit dans ladite chambre au cours d'une seconde période de temps subséquente à ladite première période de temps.

14. Installation de manutention et de traitement de matériaux, comprenant un équipement de manutention de matériaux produisant des matières particulaires, ladite installation comprenant au moins un dispositif selon l'une quelconque des revendications précédentes.

15. Installation selon la revendication 14, agencée pour la manutention et le traitement de produits secs, y compris l'un parmi des produits alimentaires, des produits de tabac haché, des produits médicaux et des produits chimiques.
